# FASCICULE DE BREVET EUROPEEN

(11) **EP 2 720 083 B1**
(45) Date de publication et mention de la délivrance du brevet: **19.09.2018**
(21) Numéro de dépôt: 13187282.2
(22) Date de dépôt: 03.10.2013
(51) Int. Cl.: G02F 1/1362

(54) **Procédé amélioré d'interconnexion pour micro-imageur**
Verbessertes Verbindungsverfahren für Mikrobildgeber
Improved interconnection method for micro-imaging device

(30) Priorité: 10.10.2012 FR 1259678
(43) Date de publication de la demande: 16.04.2014
(73) Titulaire: COMMISSARIAT À L'ÉNERGIE ATOMIQUE ET AUX ÉNERGIES ALTERNATIVES, 75015 Paris (FR)
(72) Inventeur: Rossini, Umberto, 38500 COUBLEVIE (FR); Flahaut, Thierry, 38220 CHOLONGE (FR)
(74) Mandataire: Decobert, Jean-Pascal

(56) Documents cités:
- EP-A1- 2 439 583
- US-A- 5 499 124
- US-A1- 2010 045 919

## Description

### DOMAINE TECHNIQUE DE L'INVENTION

La présente invention concerne en général la réalisation de dispositifs opto-microélectroniques du type imageurs de petites dimensions et plus particulièrement des micro-imageurs pour lesquels la dimension est inférieure à 1 pouce (soit 2.54 cm). Sont entre autres concernés les imageurs à technique transmissive dans lesquels des rayons lumineux sont générés d'une source située du côté opposé à la face de sortie (ou écran) des images.

Ces imageurs sont notamment à base de semi-conducteurs et nécessitent le transfert de couches fonctionnelles réalisées à la surface d'un substrat sur un autre support. Il s'agit de dispositifs hybrides, qui combinent électronique et optique.

### ÉTAT DE LA TECHNIQUE

L'industrie de la micro-électronique a recours à des techniques de plus en plus sophistiquées pour pouvoir réaliser des dispositifs électroniques hybrides, notamment les systèmes intégrés de type optoélectronique qu'elle doit produire pour toutes sortes de dispositifs portables comme les téléphones, ordinateurs et autres appareillages devant nécessairement combiner électronique et optique. Ces techniques demandent notamment de pouvoir transférer des couches fonctionnelles réalisées à la surface d'un premier substrat sur un second substrat.

Un composant optique classique de ces appareillages est depuis l'origine un écran ou afficheur de grande taille, taille qui s'exprime en pouces (1 pouce = 2,54 centimètres), voire en dizaines de pouces, souvent de type dit à « cristaux liquides ». Généralement désignés par leur acronyme LC, de l'anglais « liquid crystal », ces afficheurs de grande taille combinent optique et électronique typiquement sous la forme, dans chaque pixel, d'un transistor de sélection

Plus récemment, le besoin de pouvoir disposer d'imageurs de petite taille, moins de un pouce de diagonale d'écran, s'est fait sentir. Il s'agit typiquement d'afficheurs et aussi de projecteurs qualifiés de micro afficheurs ou micro, voire nano, projecteurs. Par exemple, un nano projecteur peut alors être intégré dans un dispositif portable pour pouvoir projeter des images sur un écran de relativement grande taille. La réalisation de tels imageurs implique cependant la mise en oeuvre de techniques de fabrication compatibles avec la taille des pixels qu'il faut pouvoir obtenir dans ce cas, c'est-à-dire quelques microns (un micron ou micromètre = 10⁻⁶ mètre) seulement.

Pour pouvoir réaliser des transistors de sélection d'une performance suffisante dans chaque pixel, et aussi intégrer tous les circuits périphériques nécessaires, il faut pouvoir disposer d'une couche de silicium monocristallin de sorte à recourir à une technologie de transistors dite « à effet de champs métal-oxyde-semiconducteur aussi appelés MOSFET ». Pour ce faire, ceux-ci doivent donc être réalisés sur un premier substrat en utilisant potentiellement toutes techniques développées et mises en oeuvre depuis des décennies par l'industrie de la microélectronique pour la réalisation des circuits intégrés électroniques classiques.

Le document US 5 499 124 A divulgue un procédé de fabrication d'un afficheur à base d'une matrice de transitors en couche mince, correspondant au préambule de la revendication 1.

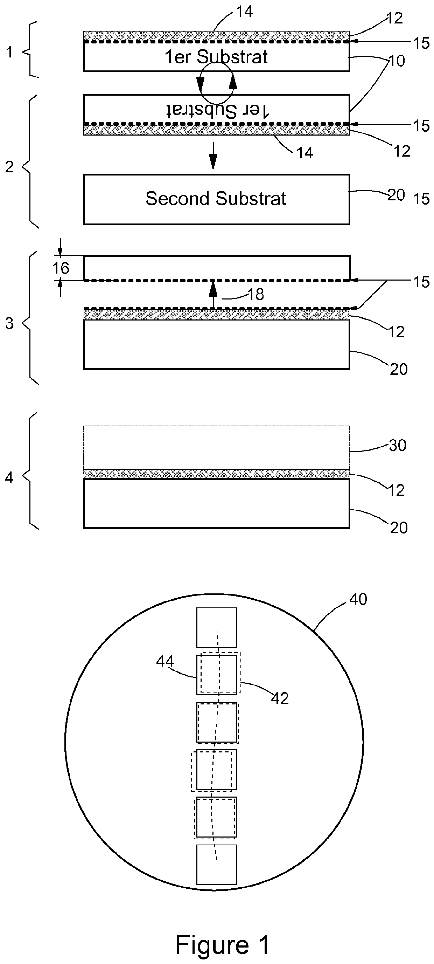

Comme schématisé sur la figure 1, lors d'une première étape 1 conventionnelle, les transistors MOSFET de sélection des pixels et toute l'électronique nécessaire sont d'abord fabriqués à la surface d'une première tranche ou substrat 10 d'un matériau semi-conducteur, le plus généralement du silicium. La partie fonctionnelle 12 est sous la forme une couche globale qui comprend une pluralité de sous-couches dont une couche de silicium monocristallin servant de fondement à la création des transistors MOSFET et des couches superposées aux précédentes. Pour pouvoir effectuer, comme on va le voir ci-après, le transfert de la partie 12 sur un second substrat, le procédé de fabrication doit cependant prévoir qu'un moyen de séparation sous forme d'une couche 15, sous-jacente à la couche 12, existe ou a été créé préalablement. Cette couche 15 fait office, par exemple, de couche de base à une attaque chimique ou de couche moins résistante qui permettra une séparation mécanique.

La face supérieure 14 de la première partie fonctionnelle 12 qui contient tous les circuits déjà réalisés est alors collée à l'étape suivante n°2 sur un second support ou substrat 20. Dans le cas d'un afficheur ou d'un projecteur, le second substrat est une tranche d'un matériau transparent, typiquement du verre.

La partie fonctionnelle 12 basée sur le premier substrat et contenant les composants déjà fabriqués se trouve alors effectivement transférée à l'étape suivante n°3 sur le second substrat après que l'épaisseur en excès 16 du premier substrat aura été enlevée comme le montre la flèche 18. Différentes méthodes sont connues et employées par l'industrie de la microélectronique comme de créer une zone de fracture qui permet un clivage et une réutilisation de l'épaisseur restante du premier substrat. On peut aussi combiner attaques mécanique et chimique du premier substrat jusqu'à rencontrer une couche de base qui aura été préalablement créée dans le premier substrat. Selon les cas, tout ou partie de la couche de séparation 15 reste au-dessus de la couche 12.

Quelle que soit la méthode qui aura été employée pour le transfert, à l'issue de cette étape, on dispose alors d'une première partie fonctionnelle 12 dans laquelle des composants actifs du type MOSFET auront déjà été réalisés à partir de silicium monocristallin et au-dessus de laquelle une autre partie fonctionnelle 30 du composant hybride doit être fabriquée. Dans le cas d'un afficheur ou d'un projecteur, il s'agira donc de réaliser à l'étape suivante 4 les pixels en cristaux liquides.

La technique de transfert brièvement décrite ci-dessus s'accompagne toujours en pratique cependant au niveau d'une tranche 40 d'une déformation géométrique horizontale de la fine couche transférée du premier substrat. Cette déformation, dite déformation de nappe, fait que les motifs transférés 42 se trouvent déplacés en particulier suivant un plan transversal à l'épaisseur de la tranche 40 par rapport à leur position nominale initiale 44, celle qui avait été obtenue après les opérations de photolithographie effectuées sur le premier substrat avant transfert. Le résultat est donc une incertitude sur la position des motifs du premier substrat. Cela se traduit suivant l'état de la technique actuel, par un surdimensionnement, dans la première partie fonctionnelle 12, des plages servant à la connexion ultérieure avec des organes de connexion électriques formées sur la deuxième partie fonctionnelle 30. On doit prendre en compte les décalages possibles entre les positions des composants de la première partie fonctionnelle 12 avant et après transfert ce qui conduit en pratique à devoir réduire la densité d'intégration du premier substrat pour pouvoir accepter ces décalages.

On notera ici que le transfert d'une couche de silicium monocristallin sur un second substrat est couramment pratiqué par l'industrie de la microélectronique pour obtenir des substrats élaborés de type dit SOI, de l'anglais « silicon on insulator », c'est-à-dire des substrats « silicium sur isolant ». Cependant, dans ce cas, aucun motif n'étant créé avant le transfert d'une mince couche continue, faite d'un isolant et de silicium monocristallin, les déformations de nappe sont sans conséquences. C'est la présence de motifs sous forme de connexions électriques dans la couche transférée qui révèle la déformation de nappe.

C'est donc un objet de l'invention que de décrire un procédé qui permet d'accommoder les déformations de nappe qui apparaissent lors du transfert d'une couche de composants déjà formés à la surface d'un premier substrat sur un second substrat sans impacter la densité d'intégration et même avantageusement l'accroitre significativement.

D'autres objets, caractéristiques et avantages de la présente invention apparaîtront à l'examen de la description suivante et des dessins d'accompagnement. Il est entendu que d'autres avantages peuvent être incorporés.

### RÉSUMÉ DE L'INVENTION

Un aspect de modes de réalisation de l'invention concerne un procédé de fabrication micro-imageur opto-microélectronique, comprenant :
une étape de formation d'une première partie fonctionnelle sur la base d'un premier substrat de type semi-conducteur sur isolant qui comprend une couche superficielle de semi-conducteur monocristallin et une couche de base de matériau électriquement isolant immédiatement sous-jacente à la couche superficielle, la couche superficielle et au moins une partie de la couche de base faisant partie de la première partie fonctionnelle, étape de formation dans laquelle on réalise au moins un transistor à effet de champs métal-oxyde-semiconducteur (MOSFET) à partir de la couche de surface, et au moins une couche de câblage, au-dessus de la couche superficielle, dans laquelle est formée au moins une première plage de connexion électrique configurée pour participer à une liaison électrique d'une électrode du transistor à une électrode de pixel;
une étape de transfert de la première partie fonctionnelle en rendant solidaire une face supérieure de la première partie fonctionnelle située d'un côté de la première couche fonctionnelle opposé à la couche de base et un deuxième substrat,
une étape d'amincissement du premier substrat par la face du premier substrat opposée au deuxième substrat jusqu'à la couche de base en préservant au moins une partie de l'épaisseur de la couche de base;
une étape de formation, sur la couche de base, d'une deuxième partie fonctionnelle, comprenant l'électrode de pixel et dotée d'au moins une deuxième plage de connexion électrique configurée pour participer à la liaison électrique de l'électrode du transistor à l'électrode de pixel.

Ce procédé est de manière avantageuse tel que :
- il comprend, avant l'étape de transfert de la première partie fonctionnelle, une étape de formation d'au moins un via, connecté à la première plage de connexion électrique et traversant la première partie fonctionnelle depuis la première plage de connexion électrique jusqu'à la couche de base incluse.
- l'étape de formation de la deuxième partie fonctionnelle comporte le raccordement du via à la deuxième plage de connexion électrique. La largeur de la deuxième plage de connexion électrique est choisie au moins égale au double d'une déformation de nappe maximale que subit la première partie fonctionnelle lors du transfert.

L'application du procédé de l'invention permet de ne pas impacter la densité d'intégration de la première couche fonctionnelle en ne lui imposant pas d'avoir à accommoder les déformations géométriques dite de nappe que subit cette couche lors du transfert sur le second substrat.

En effet, alors que, selon les techniques existantes, ce sont les plages de connexion électrique de la première couche électrique qui doivent être dimensionnées pour pouvoir tolérer les variations géométriques, l'invention déporte la prise en compte des déformations géométriques de la première couche fonctionnelle vers la deuxième couche fonctionnelle. On combat ainsi un préjugé puisque l'homme du métier aurait systématiquement cherché à solutionner le problème de la déformation de nappe à l'endroit où elle se produit, c'est-à-dire sur la première couche fonctionnelle, formée à partir du premier substrat.

Suivant d'autres aspects, l'invention a aussi trait à un dispositif doté d'une première couche fonctionnelle et d'une deuxième couche fonctionnelle et obtenu en utilisant le procédé de l'invention.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La FIGURE 1a décrit les étapes du transfert d'une couche fonctionnelle d'un premier substra sur un second substrat et la FIGURE 1b illustre la déformation géométrique dite de nappe de la couche transférée.
Les FIGURES 2a et 2b, illustrent la façon conventionnelle de prendre en compte, au niveau du premier substrat, la déformation de nappe engendrée par le transfert.
Les FIGURES 3a et 3b montrent comment la déformation de nappe est prise en compte selon l'invention sans affecter la densité d'intégration de la première partie fonctionnelle issue du premier substrat.

Les dessins joints sont donnés à titre d'exemples et ne sont pas limitatifs de l'invention.

### DESCRIPTION DÉTAILLÉE DE L'INVENTION

Avant d'entamer une description de détail de l'invention en référence aux figures, on énumère ci-après des caractéristiques que l'invention peut incorporer, soit séparément, soit selon toutes combinaisons entre elles :
- la largeur de la deuxième plage raccordée au via est choisie égale au double d'une déformation de nappe maximale (D) que subit la première partie fonctionnelle lors du transfert.
- l'étape de formation du via comprend la formation d'un trou de via par photolithographie de définition d'un motif de trou de via et gravure.
- la formation du trou de via est configurée pour obtenir un trou de via de diamètre inférieur à 1 micromètre, et de préférence inférieur à 0.8 micromètre voire 0.5 micromètre.
- largeur de la première plage de connexion électrique est inférieure à la largeur de la deuxième plage de connexion électrique.
- la largeur de la première plage de connexion électrique est inférieure à à 0.5 micromètre, et de préférence inférieure à 0.4 micromètre.
- l'étape de formation de la première partie fonctionnelle est configurée pour que la distance séparant le transistor et la première plage de connexion transversalement à l'épaisseur de la première couche fonctionnelle soit aussi faible que possible, par exemple inférieure à 0.5 micromètre, cette distance devant par ailleurs être suffisante pour préserver l'intégrité du transistor. On se référera pour évaluer cette distance minimum aux règles de dessin imposées à ce sujet pour la technologie utilisée.
- la première plage de connexion électrique est métallique.
- deuxième plage de connexion électrique est métallique.
- l'électrode de pixel est semi-transparente ou transparente.
- la première partie fonctionnelle comprend une pluralité de transistors à effet de champs métal-oxyde-semiconducteur (MOSFET) et plusieurs premières plages de connexion électrique, et la deuxième partie fonctionnelle comprend plusieurs électrodes de pixel et plusieurs deuxièmes plages de connexion électrique, et on forme plusieurs vias chacun configuré de sorte à raccorder électriquement une première plage de connexion électrique et une deuxième plage de connexion électrique.
- la couche superficielle est en silicium monocristallin et la couche de base comporte une couche d'oxyde de silicium enterrée (BOX).
- l'étape de formation de la première couche fonctionnelle comprend la formation de caissons d'isolement délimités par des tranchées remplies d'oxyde de silicium.
- la partie de grille du au moins un transistor est constituée de silicium polycristallin dans une couche de la première partie fonctionnelle située immédiatement sur la couche superficielle.
- l'étape de formation de la première couche fonctionnelle comprend la réalisation d'une pluralité de couches de câblage à différents niveaux dans la première partie fonctionnelle.
- on forme des moyens de traitement optique de flux lumineux dans la deuxième partie fonctionnelle.
- le second substrat est choisi transparent.
- l'étape de formation de la deuxième couche fonctionnelle comprend la formation d'une couche de cristaux liquides en contact avec une face de l'électrode de pixel opposée à la deuxième plage de connexion électrique.

Par ailleurs, on donne ci-après quelques observations générales:
- le procédé ici présenté s'adresse à des imageurs de petites dimensions dits mico-imageurs, ce qui s'entend au sens de la présente description comme tout dispositif de génération d'images (projecteurs et afficheurs notamment) dont les dimensions sont telles que la diagonale de fenêtre de production d'images a une longueur de 1 pouce (soit 2.54 cm) au plus. Dans des cas très miniaturisés, le terme « micro-imageur » inclut des nano-imageurs.
- on entend par partie fonctionnelle une partie, en particulier sous forme d'un empilement de couches, du dispositif apte à réaliser au moins une fonction technique déterminée par l'application. Par exemple, une couche fonctionnelle peut réaliser des moyens électroniques de commande, notamment avec des fonctionnalités d'interrupteurs par exemple mises en oeuvre par des transistors de sélection. Une partie fonctionnelle peut aussi avoir une fonction optique, incorporant des cristaux liquides et éventuellement aussi au moins une portion des moyens pour leur commande, assurant une fonctionnalité de valves de lumière. D'une manière générale, toute partie dotée de moyens de conduction électrique entre dans le cadre de la dénomination de partie fonctionnelle. Cette dernière peut en outre comporter différentes sous couches.
- les termes plage de connexion électrique s'entendent de tous moyens aptes à réaliser une fonction de connexion électrique, par exemple pour la transmission d'information par voie électrique (commande de transistors ou contrôle de cristal liquide via une électrode, à titre d'exemple). A titre préféré, les plages de connexion électrique peuvent être métalliques, et notamment en cuivre.

- l'étape d'amincissement rappelée dans le résumé de l'invention englobe toute étape pour la réduction de l'épaisseur d'un substrat, continue ou non continue, par polissage mécano chimique, mécanique, chimique ou par tout autre moyen.
- l'expression « couche de base » s'entend d'une portion de l'épaisseur du premier substrat du type silicium sur isolant (SOI) servant à recevoir en superposition des couches et constituants de la première partie fonctionnelle. Eventuellement, la couche de base participe au process d'amincissement du premier substrat en servant de couche d'arrêt pour un polissage mécano-chimique sélectif, de couche de détection pour identifier une transition entre deux couches contrôlant l'arrêt de l'amincissement ou encore, notamment de couche de fracture pour un amincissement incluant une rupture du premier substrat.
- le terme « épaisseur » est employé pour définir une dimension dans le sens des empilements des couches du dispositif fabriqué. Le terme « largeur » est utilisé pour décrire une dimension orientée transversalement à l'épaisseur.
- les vocables du type « en-dessus, en-dessous, superposé, sous-jacente ou équivalents, servent à décrire une position relative de deux parties du dispositif suivant la dimension en épaisseur de ce dernier. Ils n'impliquent pas systématiquement que les parties en question soient en contact et, par exemple immédiatement au-dessus ou en-dessous.
- les expressions du type « égal, inférieur, supérieur » s'entendent de comparaisons entre des grandeurs, ces comparaisons pouvant accommoder certaines tolérances, notamment selon l'échelle de grandeur des valeurs comparées et les incertitudes de mesure. Des valeurs sensiblement égales, inférieures ou supérieures entre dans le cadre d'interprétation de l'invention.

Avant de décrire plus avant le contenu de ces figures, il est précisé que, bien que l'invention soit décrite ci-après sur la base d'un moyen de séparation exploitant la présence d'une couche de base 15 à une attaque chimique, et comme déjà indiqué dans le chapitre sur l'état de la technique, toutes les autres méthodes employées par l'industrie de la microélectronique sont susceptibles d'être employées pour séparer premier substrat et première partie fonctionnelle lors de la mise en oeuvre de l'invention.

Dans l'exemple qui suit de mise en oeuvre de l'invention le premier substrat 10 est lui-même un substrat élaboré de type SOI. Ce type de substrat est devenu un composant de base de l'industrie de la microélectronique et est disponible commercialement, notamment auprès de fabricants spécialisés comme la société SOITEC, dont le siège social est à Bernin en France. Il s'agit donc généralement, comme ici, d'un substrat de silicium 10 comprenant déjà une mince couche uniforme superficielle de silicium monocristallin 120 séparée du substrat proprement dit par une couche d'isolant constituée ou comprenant par exemple de l'oxyde de silicium (SiO₂). Le plus souvent désignée par l'acronyme BOX de l'anglais « buried oxide layer » c'est-à-dire « couche d'oxyde enterrée » c'est cette couche qui va servir de couche de base 15 à une attaque chimique comme déjà discuté ci-dessus et dans le chapitre sur l'état de la technique.

Il faut remarquer ici que l'utilisation d'un substrat SOI de type silicium/SiO₂/silicium pour le premier substrat n'est qu'un exemple de mise en oeuvre de l'invention. La couche superficielle 120 qui sert à réaliser les composants électroniques peut être faite plus généralement d'un autre matériau semi conducteur monocristallin. Il peut s'agir, par exemple, de germanium (Ge) ou d'un alliage dit III/V comme le gallium arsenic (AsGa). D'une façon générale toute couche semi conductrice pouvant être utilisée pour fabriquer des transistors ayant de bonnes performances est susceptible de convenir. De même, la couche de base 15 n'est pas obligatoirement faite de SiO2 ni le substrat proprement dit fait de silicium. Pour réaliser le transfert de la partie 120 et des composants qui y seront formés, comme expliqué ci-après, pour constituer la partie globale fonctionnelle 12, il suffit en effet, dans cet exemple de mise en oeuvre du transfert, que le premier substrat 10 puisse être gravé sélectivement par rapport à la couche de base 15. Substrat 10 et couche de base 15 doivent donc préférentiellement seulement être constitués de matériaux adéquats présentant un différentiel de gravure important à un moyen d'attaque donné. En général, dans une première phase, on élimine par voie mécanique (par rectification par exemple) et/ou mécano-chimique une grande partie du substrat 10 et on termine l'élimination de ce substrat 10 par gravure sélective, en arrêtant la gravure sur la couche de base. Dans le cas illustré d'un substrat en silicium et d'une couche de base faite de SiO₂, la solution chimique utilisée pour graver sélectivement le silicium du premier substrat est par exemple du TMAH (Tetramethylammonium hydroxide). Le différentiel de gravure important entre ces deux matériaux permet d'arrêter l'attaque précisément sur la couche d'oxyde enterrée (BOX) en préservant tous les composants déjà formés. L'essentiel de la couche de base 15 reste en place dans ce cas et fait alors partie de la partie fonctionnelle 12 transférée. En variante, il est aussi possible d'éliminer, par gravure sélective par exemple, la couche de base par rapport à la couche superficielle 120 (par exemple à l'aide d'une gravure à l'acide fluorhydrique (HF) dans le cas d'une couche de base de SiO2 et d'une couche superficielle de silicium.

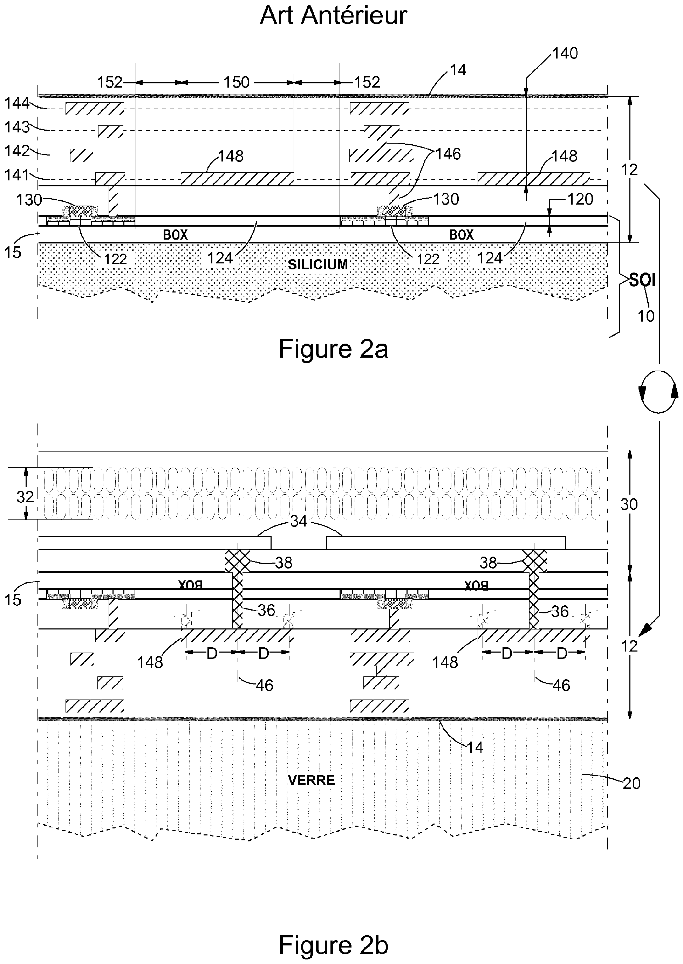

Les **figures 2a et 2b** illustrent la façon conventionnelle de prendre en compte la déformation de nappe engendrée par le transfert d'une partie fonctionnelle d'un premier substrat sur un second substrat.

La **figure 2a** illustre la structure du premier substrat après que les composants actifs ont été réalisés à partir de la couche monocristalline 120 afin de constituer la partie fonctionnelle 12 qui va être transférée sur un second substrat.

D'une façon conventionnelle, en partant d'un substrat de type SOI, les composants actifs sont fabriqués dans des îlots ou caissons 122 créés dans la mince couche de silicium monocristallin 120 disponible au-dessus de la couche d'oxyde enterrée (BOX) du substrat SOI de départ. Des valeurs typiques d'épaisseurs de ces couches sont respectivement de 0,15 et de 0,4 micron. Les caissons 122 sont isolés les uns des autres par des tranchées 124 remplies d'oxyde. La façon d'obtenir ces caissons est connue de l'homme du métier et résulte par exemple de l'application d'un procédé appelé STI, de l'anglais « shallow trench isolation » c'est-à-dire « isolation par tranchées peu profondes ». Les tranchées sont en effet creusées dans la mince couche de silicium monocristallin 120 jusqu'à l'oxyde de la couche enterrée (BOX) pour délimiter les caissons. Une fois les tranchées remplies d'oxyde, les caissons sont alors complètement isolés électriquement les uns des autres.

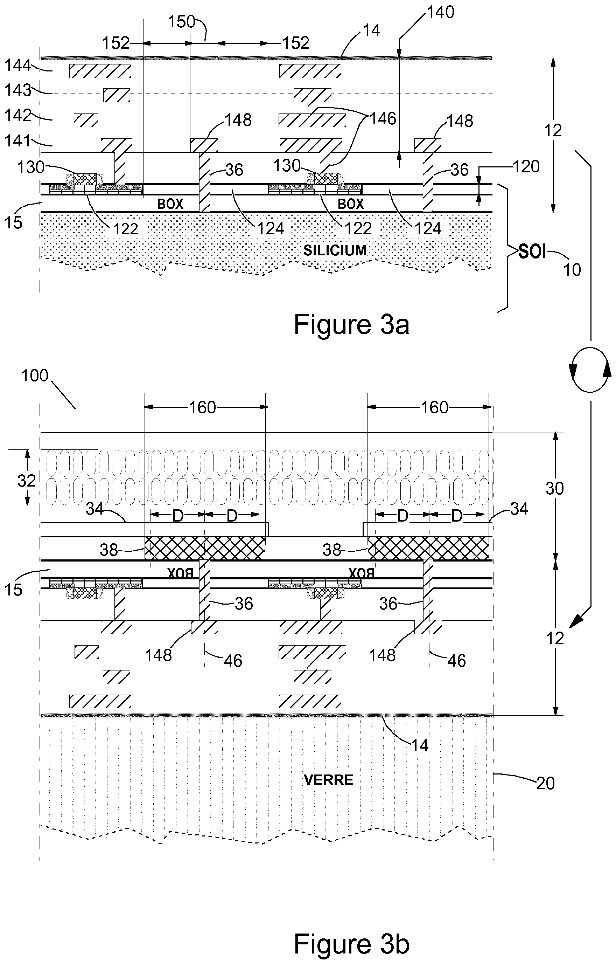

Dans les caissons, on peut ensuite réaliser des composants actifs et en particulier tous les transistors nécessaires à l'implantation des circuits électroniques du système. Dans le cas des imageurs du type de ceux considérés dans l'invention, on va pouvoir y réaliser notamment les transistors de sélection des pixels. Ces transistors auront une excellente performance puisque faits à partir de silicium monocristallin et avantageusement basés sur une couche isolante limitant les fuites de courant. L'invention ne fait cependant pas d'hypothèse, ni sur la structure, ni sur le type des transistors fabriqués. Il s'agira de manière générale de transistors dits MOSFET, de l'anglais « metal-oxide-semiconductor field-effect-transistor », c'est-à-dire « transistor à effet de champ métal-oxyde-semiconducteur ». La grille 130 de ces transistors, est généralement faite de silicium polycristallin, et est ici schématisée dans la figure 3a dans une couche de la partie fonctionnelle 12 immédiatement au-dessus de la couche superficielle 120. Source et drain, les deux autres électrodes du transistor sont situés dans la couche 120 et obtenus par dopage du silicium sous-jacent provenant de la couche 120. Ils sont représentés également en figure 3a avec un motif de dessin plus foncé que la grille 130 et de part et d'autre d'une partie de canal de transistor.

Une fois fabriqués, tous les transistors doivent être interconnectés pour réaliser les fonctions électroniques intégrées du système. Noyées dans de l'oxyde 140 qui sert d'isolant, quatre couches de câblage horizontal : 141, 142, 143 et 144, sont ici représentées à titre d'exemple. Le nombre de couches nécessaires est fonction de la densité des interconnexions entre composants du système et en général de la complexité des fonctions à réaliser. Il faut pouvoir aussi réaliser des connexions verticales entre les couches. Cela prend notamment la forme de vias 146 qui sont aussi utilisés pour atteindre les électrodes des transistors. Des moyens et procédés pour obtenir ces résultats sont connus de l'homme du métier. Par exemple, le câblage des circuits intégrés récents est réalisé par des interconnexions et des vias en cuivre à l'aide d'une technique appelée « double damascène » qui permet d'obtenir la structure de câblage représentée sur la figure 2a. C'est la surface 14 de ces couches de câblage qui va être collée sur le second substrat au cours de l'opération qui suit. En ce qui concerne le câblage, la spécificité d'un système hybride tel que considéré par le mode ici décrit de l'invention est qu'il faut aussi prévoir, dès la réalisation du premier niveau de câblage 141, les interconnexions avec les parties du système qui seront réalisées après transfert de la partie 12 sur un second substrat. C'est en effet le premier niveau de câblage 141 qui sera le plus accessible après retournement et collage sur le second substrat.

Pour pallier la déformation de nappe discutée dans le chapitre sur l'état de la technique et illustrée sur la figure 1b, il faut alors prévoir dans les couches transférées issues du premier substrat, pour chaque interconnexion devant exister entre les composants créés avant et après transfert, des plages 148 d'une taille 150 compatible avec le décalage maximum qui pourra résulter du transfert. Ce décalage est illustré en figure 1b sous la forme d'un motif 42 décalé par rapport à sa position nominale 44.

On notera ici que les interconnexions entre les composants réalisés avant et après transfert peuvent être très nombreuses. Dans le cas d'un imageur, chaque pixel doit être connecté à au moins un transistor de sélection. Des centaines de milliers d'interconnexions, voire des millions pour les matrices les plus denses, doivent pouvoir ainsi être formées, ce qui ne manque pas d'affecter fortement la densité des circuits électroniques que l'on peut réaliser sur le premier substrat. La taille 150 de la surface des plages 148 ne dépend pas en effet des spécifications géométriques qui s'appliquent pour définir les motifs du premier substrat mais du décalage maximum résultant de la déformation de nappe qu'il faut pouvoir accommoder. On notera aussi qu'aucun composant actif ne pourra être présent sous la plage métallique 148 et qu'il faut également respecter les contraintes géométriques propres au premier substrat qui spécifie la distance minimale 152 qui doit exister avec les caissons où sont réalisés les composants actifs que sont les transistors MOSFET.

À titre d'exemple, le décalage résiduel qu'il faut pouvoir accommoder est de plus ou moins 0,5 micron compte tenu des corrections qui sont effectuées par l'équipement assurant l'insolation des résines utilisées lors des opérations de lithographie, équipement connu sous son nom en anglais de « stepper ». Cela oblige à créer une plage métallique 148 de connexion avec les composants du second substrat d'une taille 150 de 1 micron alors que la taille minimale qu'il faudrait réaliser, répondant aux seules spécifications géométriques du premier substrat, et s'il n'y avait donc pas de déformation de nappe, serait dans les mêmes conditions de moins de 0,1 micron.

La **figure 2b** illustre le dispositif après transfert sur le second substrat 20, dans les conditions décrites précédemment, et après réalisation des composants fabriqués ensuite. Ces composants constituent la partie fonctionnelle 30 fabriquée après transfert. Ils comprennent, dans le cas représentés, une pluralité de deuxièmes plages de connexion électriques 38 chacune réalisée au contact du via 36 correspondant. A l'opposé du via 36, la plage de connexion électrique 38 est raccordée à une électrode 34, par exemple en ITO.

Le collage (qui s'entend ici de toute méthode pour solidariser) de la surface supérieure 14 de la première partie fonctionnelle 12 (c'est-à-dire la face externe de la partie 12 opposée au substrat 10 servant de support à ce stade) sur le second substrat 20, du verre dans cet exemple, peut faire appel à des techniques et méthodes connues de l'homme du métier. Il pourra s'agir par exemple d'un collage direct (sans apport de matière adhésive) ou d'un collage à l'aide d'une matière adhésive. C'est le collage et l'opération de transfert de la mince couche fonctionnelle 12 précédemment créée sur un premier substrat qui est la cause de la déformation de nappe constatée.

L'invention ne fait pas d'hypothèse sur la nature des composants créés dans la partie 30 mais la couche 30 comprendra typiquement une couche de cristaux liquides 32 au-dessus d'électrodes 34 faites d'ITO, de l'anglais « indium tin oxyde » c'est-à-dire « oxyde d'indium et d'étain ». Ce matériau est à la fois transparent et conducteur. Les électrodes 34 vont alors définir la surface de chacun des pixels de l'imageur.

Pour assurer les interconnexions entre les composants réalisés avant et après transfert, respectivement dans les parties 12 et 30, il va d'abord falloir créer, après transfert et enlèvement du silicium du premier substrat jusqu'à la couche de base 15, des vias 36 et des plages de connexion électrique 38 qui serviront aux connexions avec les éléments actifs de la couche 30, c'est-à-dire les électrodes 34 en ITO dans cet exemple. Les vias 36 créés après transfert doivent pouvoir atteindre les plages de connexion 148 qui ont été préparées dans la partie fonctionnelle 12, réalisée avant transfert à la surface du premier substrat, et ce, en dépit de la déformation de nappe qui résulte de cette opération. Ces plages 148 de grandes tailles doivent pouvoir accommoder des décalages +/- D autour d'une position nominale 46, ce qui impacte grandement la densité d'intégration des composants réalisés avant transfert sur le premier substrat en ne permettant pas de complètement tirer parti des spécifications géométriques qui s'appliquent pour définir les motifs du premier substrat en raison du fait qu'il faut pouvoir accommoder, dès ce niveau, le décalage maximum D résultant de la déformation de nappe.

Les **figures 3a et 3b** décrivent un mode de réalisation de l'invention et montrent des aspects caractéristiques de l'invention relativement au procédé typique présenté aux figures 2a et 2b. Pour les aspects communs entre le cas des figures 3a, 3b et celui des figures 2a, 2b, les points décrits précédemment sont transposables au mode de réalisation des figures 3a, 3b. La **figure 3a** illustre, comme la figure 2a précédente à qui elle doit être comparée, la structure du premier substrat avant transfert. La figure 3a montre notamment que les vias 36, qui permettront l'interconnexion avec les composants fabriqués après transfert, sont préparés et réalisés en même temps que la fabrication de la couche globale 12 et en utilisant préférentiellement les mêmes techniques et moyens que ceux mis en oeuvre pour la réalisation de celle-ci.

Les vias 36 sont donc creusés, préférentiellement par gravure (ce qui comprend avantageusement : une définition de motifs de vias par la technique de la photolithographie et la gravure proprement dite ; en cas de gravure du type plasma, on pourra aussi avoir recours à un masque dur) et au moins partiellement remplis de métal, tel du cuivre, comme les autres vias 146 servant d'une part à l'interconnexion des différentes couches de câblage et d'autre part à connecter les électrodes des transistors et éléments actifs réalisés dans les caissons 122. On notera que les vias 36 sont avantageusement positionnés pour avoir à traverser uniquement des couches d'oxyde, notamment les zones d'oxyde STI 124 et ensuite la couche de base 15 constituée par la couche d'oxyde enterrée (BOX) du substrat SOI 10 de départ. L'oxyde de silicium est facilement gravé pour permettre de former les vias 36 d'interconnexion avec les composants qui seront réalisés après transfert.

On comprend qu'une électrode d'un transistor de sélection (particulièrement source ou drain) peut ainsi être reliée électriquement à une électrode de pixel par une chaine d'organes de conduction comprenant un via au contact de la source ou du drain comme apparaissant notamment pour le transistor de gauche de la figure 3b, une plage de contact et un circuit dans un niveau de câblage (non représenté) raccordé à la première plage 148 elle-même suivie du via 36 dont l'extrémité opposée est au contact de la deuxième plage 38 adossée à l'électrode 34.

Les vias 36 sont de manière caractéristique réalisés au cours du même cycle de fabrication que la partie fonctionnelle 12. Les plages de connexion 148 avec le premier niveau de métal 141 peuvent alors être réalisées en ne tenant compte que des seules spécifications géométriques imposées par la technologie utilisée pour cette couche. Ces spécifications définissent les dimensions minimales des motifs et les distances qu'il faut respecter entre motifs comme par exemple la distance repérée 152.La taille 150 représentant la largeur des plages de connexion 148 ne dépend donc plus comme précédemment de la déformation de nappe et peut être réduite à la taille minimale permise par les spécifications géométriques comme on peut le voir sur la figure 3a. Dans le cas des figures 3a et 3b, les vias 36 traversent la couche de base 15 et une partie de l'épaisseur de la première couche fonctionnelle 12, notamment la couche 120 au niveau d'une zone d'oxyde 124. Ce cas n'est pas limitatif. L'invention s'applique en effet à toute configuration dans laquelle une plage de connexion électrique est à relier électriquement à une autre plage située sur une autre couche fonctionnelle elle-même formée à partir d'un deuxième substrat. Par exemple, le via 36 peut traverser une partie plus ou moins grande de l'épaisseur de la première partie fonctionnelle.

La **figure 3b** illustre, comme la figure 2b précédente à qui elle doit être comparée, la structure du premier substrat après transfert et montre comment un dispositif hybride du type micro-imageur 100 est réalisé par l'invention.

La figure 3b montre notamment que ce sont maintenant les plages 38, réalisées dans la couche 30 après transfert, qui servent à accommoder la déformation de nappe. L'étape de raccordement des vias 36 et des plages 38 est avantageusement intéressante à la réalisation des plages, leur contact étant formé lorsque les plages 38 sont créées. La densité des interconnexions électriques nécessaires dans cette couche 30 de technologie très différente de celle 12 servant à réaliser les composants électroniques permet, sans inconvénients, de réaliser des plages 38 d'une taille 160 suffisante pour pouvoir accommoder à ce niveau les décalages +/- D déjà discutés dans les figures précédentes.

Dans le cadre de la réalisation de dispositifs hybrides optoélectroniques comme les micro-afficheurs ou projecteurs discutés ici, c'est en effet la taille des pixels et des électrodes 34, faites en matériau électriquement conducteur et au moins semi transparent voire transparent, et notamment d'ITO, qui gouverne pour l'essentiel la densité d'intégration à ce niveau.

Les plages de connexion 38 selon l'invention sont avantageusement métalliques, et par exemple en cuivre, et sont préférentiellement fabriquées de manière similaires aux autres plages dont les plages 148, de sorte à uniformiser le procédé de fabrication global. L'emploi de matériaux opaques pourra être privilégié dans un mode de réalisation dans lequel les plages 38 servent aussi d'écran de protection contre la lumière pour les transistors sous-jacents. Les transistors sont en effet sensibles à la lumière. Il est avantageux de prévoir des écrans pour éviter des fluctuations de fonctionnement avec l'éclairement On peut aussi sélectionner d'autres matériaux pour les plages de connexion 38 et par exemple des matériaux transparents ou semi-transparents (définis ici comme transmettant au moins une partie, et préférentiellement au moins 50%, des rayons d'un flux lumineux incident), de sorte que les dimensions en largeur des plages 38 n'est pas pénalisante du point de vue optique. Dans un mode de réalisation chaque plage 38 est une portion de l'électrode 34.

On peut grâce à l'invention accommoder la déformation de nappe de la couche transférée sans diminuer sa densité d'intégration.

La formation des vias 36 par photolithographie et gravure offre en outre la capacité d'un dimensionnement très réduit des trous de via, en particulier de diamètre inférieur à 0.5 micromètre, voire moins et notamment en-deçà de 0.4 micromètre. Les premières plages de connexion 148 peuvent être dimensionnées suivant le même ordre de grandeur, se situant simplement dans la continuité des vias 36. Elles auront donc très avantageusement une largeur bien moindre que celle des deuxièmes plages 38. Bien que cela n'apparaisse pas dans le cas des figures entre la figure 2a et la figure 3a, on comprend que ces réductions dimensionnelles permettent aussi de réduire la distance 152 entre plage 148 et bord latéral de transistor, de sorte à limiter cet écartement notamment à une distance inférieure à 1 micromètre, avantageusement moins de 0.5 micromètre, voire au minimum imposé par le fondeur pour garantir l'intégrité du transistor. L'ouverture du pixel est donc de manière avantageuse aussi grande que possible. D'une manière générale, au moins l'une des dimensions transversales parmi celle du via 36, celle de la plage 148 et la distance 152 est choisie de sorte à être à la limite inférieure des capacités technologiques des procédés de fabrication mis en oeuvre et notamment la photolithographie et autres techniques de gravure de semi-conducteurs.

## Revendications

1. Procédé de fabrication d'un micro-imageur opto-microélectronique (100), comprenant :
- une étape de formation d'une première partie fonctionnelle (12) sur la base d'un premier substrat (10) de type semi-conducteur sur isolant qui comprend une couche superficielle (120) de semi-conducteur monocristallin et une couche de base (15) de matériau électriquement isolant immédiatement sous-jacente à la couche superficielle (120), la couche superficielle (120) et au moins une partie de la couche de base (15) faisant partie de la première partie fonctionnelle (12), étape de formation dans laquelle on réalise une pluralité de transistors à effet de champs métal-oxyde-semi-conducteur (MOSFET) à partir de la couche de surface (120), et au moins une couche de câblage (141-144), au-dessus de la couche superficielle (120), dans laquelle est formée au moins une première plage de connexion électrique (148) configurée pour participer à une liaison électrique d'une électrode de chaque transistor à une électrode (34) de pixel, chaque transistor ayant une position nominale dans le plan du substrat ;
- une étape de transfert de la première partie fonctionnelle (12) en rendant solidaire une face (14) supérieure de la première partie fonctionnelle (12) située d'un côté de la première couche fonctionnelle (12) opposé à la couche de base (15) et un deuxième substrat (20),
- une étape d'amincissement du premier substrat (10) par la face du premier substrat (10) opposée au deuxième substrat (20) jusqu'à la couche de base (15) en préservant au moins une partie de l'épaisseur de la couche de base (15);
- une étape de formation, sur la couche de base (15), d'une deuxième partie fonctionnelle (30), comprenant l'électrode (34) de pixel et dotée d'au moins une deuxième plage de connexion électrique (38) configurée pour participer à la liaison électrique de l'électrode de chaque transistor à une électrode de pixel,
- avant l'étape de transfert de la première partie fonctionnelle (12), une étape de formation d'au moins un via (36), connecté à la première plage de connexion électrique (148) et traversant la première partie fonctionnelle (12) depuis la première plage de connexion électrique (148) jusqu'à la couche de base (15) inclue;
procédé dans lequel l'étape de formation de la deuxième partie fonctionnelle (30) comporte le raccordement du via (36) à la deuxième plage de connexion électrique (38),
**caractérisé en ce que** la largeur de la deuxième plage de connexion électrique (38) est choisie au moins égale au double d'une déformation de nappe maximale que subit la première partie fonctionnelle (12) lors du transfert, ladite déformation de nappe étant déterminé comme étant le déplacement maximal dans le plan du substrat subi par la pluralité de transistors par rapport à la position nominale lors de l'étape de transfert.

2. Procédé selon la revendication précédente dans lequel la largeur de la deuxième plage raccordée au via (36) est choisie égale au double d'une déformation de nappe maximale (D) que subit la première partie fonctionnelle (12) lors du transfert.

3. Procédé selon l'une des revendications précédentes dans lequel l'étape de formation du via (36) comprend la formation d'un trou de via par photolithographie de définition d'un motif de trou de via et gravure.

4. Procédé selon la revendication précédente dans lequel la formation du trou de via est configurée pour obtenir un trou de via de diamètre inférieur à 1 micromètre.

5. Procédé selon l'une des revendications précédentes dans lequel la largeur de la première plage de connexion électrique (148) est inférieure à la largeur de la deuxième plage de connexion électrique (38).

6. Procédé selon la revendication précédente dans lequel la largeur de la première plage de connexion électrique (148) est inférieure à 0.5 micromètre.

7. Procédé selon l'une des revendications précédentes dans lequel l'étape de formation de la première partie fonctionnelle (12) est configurée pour que la distance séparant le transistor et la première plage de connexion (148), transversalement à l'épaisseur de la première couche fonctionnelle (12), soit inférieure à 0.5 micromètre.

8. Procédé selon l'une des revendications précédentes dans lequel la première plage de connexion électrique (148) est métallique.

9. Procédé selon l'une des revendications précédentes dans lequel la deuxième plage de connexion électrique (38) est métallique.

10. Procédé selon l'une des revendications précédentes dans lequel l'électrode (34) de pixel est semi-transparente ou transparente.

11. Procédé selon l'une des revendications précédentes dans lequel la première partie fonctionnelle (12) comprend une pluralité de transistors à effet de champs métal-oxyde-semi-conducteur (MOSFET) et plusieurs premières plages de connexion électrique (148), et dans lequel la deuxième partie fonctionnelle (30) comprend plusieurs électrodes de pixel et plusieurs deuxièmes plages de connexion électrique (38), et dans lequel on forme plusieurs vias (36) chacun configuré de sorte à raccorder électriquement une première plage de connexion électrique (148) et une deuxième plage de connexion électrique (38).

12. Procédé selon l'une des revendications précédentes dans lequel la couche superficielle (120) est en silicium monocristallin et la couche de base (15) comporte une couche d'oxyde de silicium enterrée (BOX).

13. Procédé selon la revendication précédente dans lequel l'étape de formation de la première couche fonctionnelle (12) comprend la formation de caissons d'isolement (122) délimités par des tranchées remplies d'oxyde de silicium (124).

14. Procédé selon l'une des deux revendications précédentes dans lequel la partie de grille (130) du au moins un transistor est constituée de silicium polycristallin dans une couche de la première partie fonctionnelle (12) située immédiatement sur la couche superficielle (120).

15. Procédé selon l'une des revendications précédentes dans lequel l'étape de formation de la première couche fonctionnelle (12) comprend la réalisation d'une pluralité de couches de câblage (141, 142, 143, 144) à différents niveaux dans la première partie fonctionnelle (12).

16. Procédé selon l'une quelconque des revendications précédentes dans lequel on forme des moyens de traitement optique de flux lumineux dans la deuxième partie fonctionnelle (30).

17. Procédé selon la revendication précédente dans lequel le second substrat (20) est choisi transparent.

18. Procédé selon l'une des revendications précédentes dans lequel l'étape de formation de la deuxième couche fonctionnelle (30) comprend la formation d'une couche de cristaux liquides en contact avec une face de l'électrode (34) de pixel opposée à la deuxième plage de connexion électrique (38).

## Patentansprüche

1. Verfahren zum Herstellen eines opto-mikroelektronischen Mikrobildgebers (100), umfassend:
- einen Schritt des Ausbildens eines ersten Funktionsabschnitts (12) auf Basis eines ersten Halbleiter-auf-Isolator-Substrats (10), das eine monokristalline Halbleiteroberflächenschicht (120) und eine Basisschicht (15) aus elektrisch isolierendem Material enthält, die unmittelbar unter der Oberflächenschicht (120) liegt, wobei die Oberflächenschicht (120) und zumindest ein Teil der Basisschicht (15) zu dem ersten Funktionsabschnitt (12) gehören, bei welchem Ausbildungsschritt eine Mehrzahl von Metalloxid-Halbleiter-Feldeffekttransistoren (MOSFETs) ausgehend von der Oberflächenschicht (120) ausgebildet wird, sowie zumindest eine Verdrahtungsschicht (141 - 144) über der Oberflächenschicht (120), in der zumindest ein erster elektrischer Verbindungsbereich (148) ausgebildet ist, der dazu ausgelegt ist, um an einer elektrischen Verbindung einer Elektrode jedes Transistors mit einer Pixelelektrode (34) mitzuwirken, wobei jeder Transistor eine Soll-Position in der Ebene des Substrats hat;
- einen Schritt des Überführens des ersten Funktionsabschnitts (12), indem eine Oberseite (14) des ersten Funktionsabschnitts (12), die auf einer der Basisschicht (15) entgegengesetzten Seite der ersten Funktionsschicht (12) liegt, und ein zweites Substrat (20) fest miteinander verbunden werden,
- einen Schritt des Verjüngens des ersten Substrats (10) an der dem zweiten Substrat (20) entgegengesetzten Seite des ersten Substrats (10) bis auf die Basisschicht (15), wobei zumindest ein Teil der Dicke der Basisschicht (15) erhalten bleibt;
- einen Schritt des Ausbildens eines zweiten Funktionsabschnitts (30) an der Basisschicht (15), der die Pixelelektrode (34) enthält und mit zumindest einem zweiten elektrischen Verbindungsbereich (38) versehen ist, der dazu ausgelegt ist, um bei der elektrischen Verbindung der Elektrode jedes Transistors mit einer Pixelelektrode mitzuwirken;
- vor dem Schritt des Überführens des ersten Funktionsabschnitts (12) einen Schritt des Ausbildens von zumindest einer Durchkontaktierung (36), die mit dem ersten elektrischen Verbindungsbereich (148) verbunden ist und sich durch den ersten Funktionsabschnitt (12) von dem ersten elektrischen Verbindungsbereich (148) bis zur enthaltenen Basisschicht (15) erstreckt;
bei welchem Verfahren der Schritt des Ausbildens des zweiten Funktionsabschnitts (30) das Anschließen der Durchkontaktierung (36) an den zweiten elektrischen Verbindungsbereich (38) umfasst,
**dadurch gekennzeichnet, dass** die Breite des zweiten elektrischen Verbindungsbereichs (38) zumindest doppelt so groß wie die maximale Lagenverformung gewählt ist, die der erste Funktionsabschnitt (12) während des Überführens erfährt, wobei die Lagenverformung als maximale Verlagerung in der Ebene des Substrats bestimmt wird, welche die Mehrzahl von Transistoren in Bezug auf die Soll-Position während des Überführungsschritts erfährt.

2. Verfahren nach dem vorangehenden Anspruch, wobei die Breite des an die Durchkontaktierung (36) angeschlossenen zweiten Bereichs doppelt so groß wie eine maximale Lagenverformung (D) gewählt ist, die der erste Funktionsabschnitt (12) während des Überführens erfährt.

3. Verfahren nach einem der vorangehenden Ansprüche, wobei der Schritt des Ausbildens der Durchkontaktierung (36) das Ausbilden eines Kontaktlochs durch Photolithographie zur Definition eines Kontaktlochmusters und durch Ätzen umfasst.

4. Verfahren nach dem vorangehenden Anspruch, wobei das Ausbilden des Kontaktlochs dazu ausgelegt ist, um ein Kontaktloch mit einem Durchmesser von weniger als 1 Mikrometer zu erhalten.

5. Verfahren nach einem der vorangehenden Ansprüche, wobei die Breite des ersten elektrischen Verbindungsbereichs (148) geringer als die Breite des zweiten elektrischen Verbindungsbereichs (38) ist.

6. Verfahren nach dem vorangehenden Anspruch, wobei die Breite des ersten elektrischen Verbindungsbereichs (148) weniger als 0,5 Mikrometer beträgt.

7. Verfahren nach einem der vorangehenden Ansprüche, wobei der Schritt des Ausbildens des ersten Funktionsabschnitts (12) so ausgelegt ist, dass der Abstand, der den Transistor und den ersten Verbindungsbereich (148) trennt, quer zur Dicke der ersten Funktionsschicht (12) weniger als 0,5 Mikrometer beträgt.

8. Verfahren nach einem der vorangehenden Ansprüche, wobei der erste elektrische Verbindungsbereich (148) aus Metall besteht.

9. Verfahren nach einem der vorangehenden Ansprüche, wobei der zweite elektrische Verbindungsbereich (38) aus Metall besteht.

10. Verfahren nach einem der vorangehenden Ansprüche, wobei die Pixelelektrode (34) halbtransparent oder transparent ist.

11. Verfahren nach einem der vorangehenden Ansprüche, wobei der erste Funktionsabschnitt (12) eine Mehrzahl von Metalloxid-Halbleiter-Feldeffekttransistoren (MOSFETs) und mehrere erste elektrische Verbindungsbereiche (148) enthält und wobei der zweite Funktionsabschnitt (30) mehrere Pixelelektroden und mehrere zweite elektrische Verbindungsbereiche (38) enthält, und wobei mehrere Durchkontaktierungen (36) ausgebildet werden, die jeweils dazu ausgelegt sind, einen ersten elektrischen Verbindungsbereich (148) und einen zweiten elektrischen Verbindungsbereich (38) elektrisch anzuschließen.

12. Verfahren nach einem der vorangehenden Ansprüche, wobei die Oberflächenschicht (120) aus monokristallinem Silicium besteht und die Basisschicht (15) eine vergrabene Siliciumoxidschicht (BOX) enthält.

13. Verfahren nach dem vorangehenden Anspruch, wobei der Schritt des Ausbildens der ersten Funktionsschicht (12) aus Ausbilden von Isolierkammern (122) umfasst, die durch mit Siliciumoxid gefüllte Gräben (124) begrenzt sind.

14. Verfahren nach einem der beiden vorangehenden Ansprüche, wobei der Gate-Teil (130) des zumindest einen Transistors aus polykristallinem Silicium in einer Schicht des ersten Funktionsabschnitts (12) besteht, die unmittelbar auf der Oberflächenschicht (120) liegt.

15. Verfahren nach einem der vorangehenden Ansprüche, wobei der Schritt des Ausbildens der ersten Funktionsschicht (12) das Ausbilden einer Mehrzahl von Verdrahtungsschichten (141, 142, 143, 144) auf verschiedenen Ebenen in dem ersten Funktionsabschnitt (12) umfasst.

16. Verfahren nach einem der vorangehenden Ansprüche, wobei Mittel zur optischen Verarbeitung eines Lichtstroms in dem zweiten Funktionsabschnitt (30) ausgebildet werden.

17. Verfahren nach dem vorangehenden Anspruch, wobei das zweite Substrat (20) transparent gewählt ist.

18. Verfahren nach einem der vorangehenden Ansprüche, wobei der Schritt des Ausbildens der zweiten Funktionsschicht (30) das Ausbilden einer Flüssigkristallschicht in Kontakt mit einer dem zweiten elektrischen Verbindungsbereich (38) entgegengesetzten Seite der Pixelelektrode (38) umfasst.

## Claims

1. Method for manufacturing an opto-microelectronic micro-imaging device (100), comprising:
- a step of forming a first functional portion (12) based on a first substrate (10) of the semiconductor-on-insulator type which comprises a surface layer (120) of monocrystalline semiconductor and a base layer (15) of electrically insulating material immediately beneath the surface layer (120), with the surface layer (120) and at least one portion of the base layer (15) being a part of the first functional portion (12), step of forming wherein is carried out a plurality of metal oxide semiconductor field effect transistors (MOSFET) from the surface layer (120), and at least one wiring layer (141-144), above the surface layer (120), wherein is formed at least one first electric connection pad (148) configured to participate in an electric connection of an electrode of each transistor to a pixel electrode (34), with each transistor having a nominal position in the plane of the substrate;
- a step of transferring the first functional portion (12) by solidly attaching an upper face (14) of the first functional portion (12) located on one side of the first functional layer (12) opposite the base layer (15) and a second substrate (20),
- a step of thinning the first substrate (10) by the face of the first substrate (10) opposite the second substrate (20) to the base layer (15) by preserving at least one portion of the thickness of the base layer (15);
- a step of forming, on the base layer (15), a second functional portion (30), comprising the pixel electrode (34) and provided with at least one second electric connection pad (38) configured to participate in the electric connection of the electrode of each transistor to a pixel electrode,
- before the step of transferring the first functional portion (12), a step of forming at least one via (36), connected to the first electric connection pad (148) and passing through the first functional portion (12) from the first electric connection pad (148) to the base layer (15) included;
method wherein the step of forming the second functional portion (30) comprises the connecting of the via (36) to the second electric connection pad (38),
**characterised in that** the width of the second electric connection pad (38) is chosen to be at least equal to twice a maximum flat deformation supported by the first functional portion (12) during the transfer, said flat deformation being determined as being the maximum displacement in the plane of the substrate undergone by the plurality of transistors with respect to the nominal position during the step of transferring.

2. Method according to the preceding claim wherein the width of the second pad connected to the via (36) is chosen equal to twice a maximum flat deformation (D) that first functional portion (12) is subjected to during the transfer.

3. Method according to one of the preceding claims wherein the step of forming the via (36) comprises the formation of a via hole by photolithography of the definition of a via hole pattern and etching.

4. Method according to the preceding claim wherein the forming of the via hole is configured to obtain a via hole with a diameter less than 1 micrometre.

5. Method according to one of the preceding claims wherein the width of the first electric connection pad (148) is less than the width of the second electric connection pad (38).

6. Method according to the preceding claim wherein the width of the first electric connection pad (148) is less than 0.5 micrometre.

7. Method according to one of the preceding claims wherein the step of forming the first functional portion (12) is configured so that the distance that separates the transistor and the first connection pad (148), transversally to the thickness of the first functional layer (12), is less than 0.5 micrometre.

8. Method according to one of the preceding claims wherein the first electric connection pad (148) is metal.

9. Method according to one of the preceding claims wherein the second electric connection pad (38) is metal.

10. Method according to one of the preceding claims wherein the pixel electrode (34) is semi-transparent or transparent.

11. Method according to one of the preceding claims wherein the first functional portion (12) comprises a plurality of metal oxide semiconductor field effect transistors (MOSFET) and several first electric connection pads (148), and wherein the second functional portion (30) comprises several pixel electrodes and several second electric connection pads (38), and wherein several vias (36) are formed with each one configured in such a way as to electrically connect a first electric connection pad (148) and a second electric connection pad (38).

12. Method according to one of the preceding claims wherein the surface layer (120) is made of monocrystalline silicon and the base layer (15) comprises a layer of buried silicon oxide (BOX).

13. Method according to the preceding claim wherein the step of forming the first functional layer (12) comprises the forming of isolation boxes (122) delimited by trenches filled with silicon oxide (124).

14. Method according to one of the two preceding claims wherein the grille portion (130) of the at least one transistor is comprised of polycrystalline silicon in a layer of the first functional portion (12) located immediately on the surface layer (120).

15. Method according to one of the preceding claims wherein the step of forming the first functional layer (12) comprises the carrying out of a plurality of wiring layers (141, 142, 143, 144) at different levels in the first functional portion (12).

16. Method according to any preceding claim wherein means of optical treatment of the light flux are formed in the second functional portion (30).

17. Method according to the preceding claim wherein the second substrate (20) is chosen transparent.

18. Method according to one of the preceding claims wherein the step of forming the second functional layer (30) comprises the formation of a layer of liquid crystal in contact with a face of the pixel electrode (34) opposite the second electric connection pad (38).
